# FASCICULE DE BREVET EUROPEEN

(11) **EP 2 612 725 B1**
(45) Date de publication et mention de la délivrance du brevet: **30.05.2018**
(21) Numéro de dépôt: 12193625.6
(22) Date de dépôt: 21.11.2012
(51) Int. Cl.: B23K 35/40, B23K 35/02, B21C 37/08, B23K 26/08, B23K 26/26, B23K 26/18, B23K 101/32

(54) **PROCÉDÉ ET INSTALLATION DE FABRICATION DE FIL FOURRÉ PAR SOUDAGE LASER AVEC PROTECTION MÉCANIQUE DU FLUX**
VERFAHREN UND VORRICHTUNG ZUR HERSTELLUNG EINER FÜLLDRAHTELEKTRODE MIT MECHANISCHEM SCHUTZ DES SCHWEIßPULVERS
METHOD AND SYSTEM FOR MANUFACTURING A FLUX CORED WELDING WIRE BY LASER WELDING WITH MECHANICAL PROTECTION OF THE FLUX

(30) Priorité: 03.01.2012 FR 1250032
(43) Date de publication de la demande: 10.07.2013
(73) Titulaire: FRO - Air Liquide Welding Italia S.p.A., 37010 Rivoli Veronese (IT)
(72) Inventeur: Scappin, Michele, 31003 Castelfranco (IT)
(74) Mandataire: Grosse Schumacher Knauer von Hirschhausen

(56) Documents cités:
- EP-A1- 1 207 002
- JP-A- 58 184 099
- US-A- 4 048 705

## Description

L'invention concerne un procédé de fabrication d'un fil fourré étanche destiné au soudage à l'arc électrique dans lequel le fil, mis en forme de U puis de O, est soudé par faisceau laser, après son remplissage des éléments de remplissage formant le flux interne du fil fourré, le flux étant protégé par un écran inséré temporairement dans le tube pendant le soudage proprement dit et retiré en fin de soudage, et préférentiellement remplacé régulièrement lorsqu'il a subi une usure trop importante.

Les fils fourrés sont utilisés dans certains procédés de soudage, notamment à l'arc, par exemple en soudage MIG/MAG ou en soudage à l'arc submergé.

Un fil fourré est habituellement constitué d'une enveloppe externe, encore appelée feuillard, formée d'une bande métallique mise sous forme tubulaire, et d'un flux de interne formé d'éléments de remplissage, tels des poudres ou des granulés. Des fils fourrés sont notamment décrits par les documents US-A-6787736 et FR-A-2766399.

La fabrication d'un fil fourré peut être réalisée selon plusieurs méthodes différentes connues présentant chacune des avantages et des inconvénients.

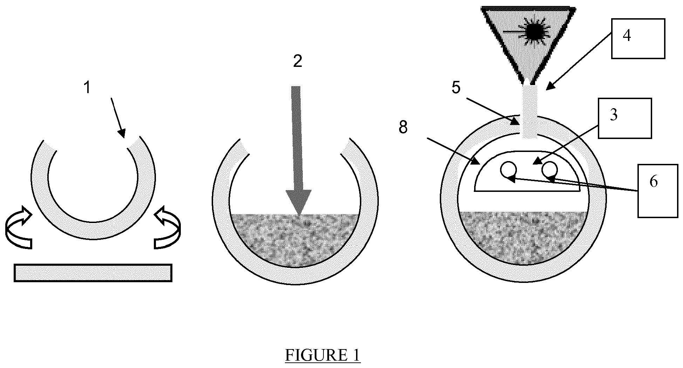

Selon une première méthode connue schématisée en Figure 1, on part d'une bande métallique ou « feuillard », qui constitue l'enveloppe externe du fil, qui est progressivement pliée par des galets formeurs ou analogue et remplie de matières premières, c'est-à-dire de flux de remplissage contenant des éléments métalliques et éventuellement non métalliques. La bande métallique est donc d'abord laminée à froid jusqu'à de relativement petites dimensions, typiquement de 9 à 30 mm de largeur et de 0,4 à 1,5 mm d'épaisseur, puis mise en forme de gouttière, c'est-à-dire de section en « U », par rapprochement l'un vers l'autre de ses deux bords longitudinaux. Ensuite, on y introduit les matières premières constituant le flux interne, puis on poursuit le formage pour aboutir à une forme tubulaire en « O » non scellée, laquelle est ensuite tréfilée jusqu'au diamètre d'utilisation désiré, par exemple de 0,8 à 4 mm de diamètre. Dans ce cas, les bords longitudinaux du tube formant le fil ne sont pas soudés et donc le fil n'est pas étanche.

Cette première méthode est relativement simple à mettre en oeuvre et permet de produire des fils avec une composition interne très homogène. Toutefois, les fils fourrés ainsi obtenus sont sensibles à la reprise d'humidité puisque n'étant pas étanches, de la vapeur d'eau peut pénétrer à l'intérieur du fil durant son stockage, ce qui peut conduire à des niveaux d'hydrogène diffusible trop élevés et donc non acceptables dans les cordons de soudure obtenus par fusion de ces fils.

Selon une deuxième méthode décrite par les documents EP-A-847831 et JP-A-58148096, on produit d'abord en continu, un fil tubulaire d'environ 10 à 25 mm de diamètre à partir d'une bande ou feuillard métallique, typiquement d'épaisseur de 1,5 à 3,5 mm et laminé à chaud, mis en forme de O, puis soudé par un procédé de soudage à haute fréquence, puis rempli de poudres par vibrations, et enfin éventuellement laminé en ligne jusqu'à un diamètre typiquement de l'ordre de 10 à 15 mm. Un recuit d'adoucissement peut être effectué et le tube est ensuite tréfilé jusqu'au diamètre de remplissage désiré, par exemple de 0,8 à 5 mm de diamètre. Le fil peut aussi subir une ou des étapes de traitement thermique de recristallisation et de nettoyage chimique ou électrochimique. Optionnellement, un revêtement à base de cuivre, nickel, laiton ou autre peut être réalisé sur la surface extérieure du fil.

Cette technologie est plus complexe à mettre en oeuvre que la précédente mais permet de produire des fils fourrés étanches, voire revêtus en surface, qui sont donc totalement insensibles à la reprise en humidité et conduisent à des niveaux d'hydrogène diffusible bas dans le métal déposé, c'est-à-dire typiquement de l'ordre de 1 à 5 ml/100g de métal déposé. En effet, durant le recuit de recristallisation, le tube devient perméable à l'hydrogène, qui s'échappe à travers l'enveloppe tubulaire. Apres refroidissement, le tube redevient étanche et empêche donc l'hydrogène de rentrer à l'intérieur et d'affecter les matières premières, c'est-à-dire le flux, qui s'y trouve. De même, sous l'effet de la pression et de la température, l'eau réagit à l'intérieur du tube avec les poudres qui s'y trouvent. De l'hydrogène (H) est généré lequel diffuse facilement dans le tube du fait de la petite taille de la molécule d'hydrogène et de la température qui y règne. Par ailleurs, l'eau présente à l'extérieur du tube sous forme de molécules de H₂O, ne diffuse pas dans le métal donc ne peut pas entrer dans le tube.

Toutefois, un inconvénient majeur réside dans le risque de ségrégation des matières premières dans le tube. En effet, si la granulométrie et/ou la granulation des matières premières n'est pas optimisée, on assiste fréquemment à une distribution non homogène du flux dans le tube, ce qui peut conduire à des problèmes de rupture de fil lors des opérations de tréfilage ou à des fils de composition non homogène sur toute leur longueur, donc à des problèmes de soudage subséquents.

Une troisième méthode connue combine les avantages des deux méthodes de fabrication précédentes et permet de produire des fils fourrés remplis en ligne, c'est-à-dire de manière continue avec un fil se déplaçant continuellement en étant entraînés par des galets motorisés, à partir d'un feuillard, c'est-à-dire d'une bande métallique, et de les souder, également en ligne, seulement immédiatement après leur remplissage par du flux. Dans ce cas, le fil est produit à partir d'un feuillard laminé que l'on forme d'abord en « U » et qu'on remplit ensuite avec un mélange homogène de différentes matières premières. Après cela, on poursuit le formage pour aboutir à une forme de O. Le tube est alors soudé en ligne, par exemple par faisceau laser ou électronique, à pénétration totale ou partielle, de manière à garantir l'étanchéité du tube. Par la suite, le tube est tréfilé jusqu'à un diamètre intermédiaire où il subi un traitement thermique et il est enfin réduit à son diamètre final d'utilisation.

Une telle méthode, notamment décrite par les documents US-A-4,673,121, GB-A-1199736, JP-A-56148494 ou WO-A-2010102318, présente cependant des inconvénients.

Ainsi, la production par laser ou par faisceau électronique, des fils fourrés engendre un risque de fusion ou de modification thermique et chimique du mélange homogène contenu dans le tube. En effet, lorsque le faisceau laser vient impacter les bords longitudinaux du feuillard métallique pour les souder l'un avec l'autre, il y a toujours un risque que le faisceau laser passe entre les deux bords longitudinaux du feuillard et aille impacter les matières premières contenue dans le tube, par exemple en cas de surpuissance ponctuelle du générateur laser conduisant à une sur-pénétration de soudage et/ou en cas de jeu ponctuel excessif entre les bords à souder. Le faisceau laser va alors entrer en contact avec le flux et engendrer une fusion localisée des matières premières du flux, donc à leur modification thermique et/ou chimique et à la formation de conglomérats durs, tel que des amas durs en forme de sphères, d'aiguilles ou autres, formés de particules de composition mixte, à savoir métallique et non métallique, de dimensions variables comprises entre quelques microns (µm) et quelques millimètres (mm) dans les cas les plus défavorables.

Or, les amas ou conglomérats durs ainsi formés engendrent des problèmes :
- soit pendant la phase de laminage et tréfilage du tube car ils peuvent déchirer le feuillard, par exemple si la dimension de l'amas dur est supérieure au diamètre interne du tube ;
- soit pendant l'utilisation du fil car un fil fourré contenant des conglomérats durs et de grandes dimensions ne fond pas de manière uniforme et peut générer des défauts dans la soudure : manque de matière, composition du métal déposé non homogène, variation incontrôlée des paramètres de soudage...

De plus, les poudres peuvent être également modifiées d'un point de vue chimique par la chaleur dégagée par le faisceau laser conduisant à des variations indésirables de leurs propriétés en soudage.

Par ailleurs, le document US-A-4048705 propose d'insérer une feuille métallique dans le pré-fil, après formage en U et introduction des poudres, laquelle vient recouvrir les poudres et les protéger lors du soudage.

Toutefois, cette solution n'est pas idéale car elle demande une parfaite synchronisation du formage en U, du remplissage avec les poudres, de la distribution de la feuille métallique et du soudage, ce qui n'est pas chose aisée au plan industriel notamment du fait des inévitables déplacements de la poudre provoqués par la feuille métallique qui n'est pas maintenue en position fixe mais libre de basculer dans le tube partiellement rempli. De plus, comme la feuille métallique reste dans le fil après soudage, elle engendre des risques de perturbation de la qualité des soudures qui seront réalisées ensuite avec le fil car le section du fil n'est pas symétrique du fait de la présence de la feuille métallique dans le tube qui va changer localement l'épaisseur du fil tubulaire et, par conséquent, la conductibilité du fil pendant le soudage en fonction du point de contact électrique dans la surface du fil. Le contact électrique entre le fil et la torche peut être effectué sur toute la circonférence du fil sans contrôle. Donc, si le contact électrique se fait là où se trouve la feuille métallique, il va se produire un changement de la résistance électrique, de la fusion, de l'apport thermique ... par rapport à un contact effectué dans la couronne circulaire où il n'y a pas de feuille métallique. Au final, l'utilisation d'un tel fil conduit à une inhomogénéité de fusion et à des résultats de soudage inégaux.

Le document EP1207002 propose la soudure à bord pour éviter le contacte du faisceau laser avec les poudres.

Le document JP 58 184099 porte sur la fabrication d'un fil fourré par résistance. Le but de la présente invention est donc de résoudre les problèmes susmentionnés, c'est-à-dire de proposer une méthode de fabrication de fils fourrés soudés et étanches, donc non ou très peu sensibles à la reprise en humidité, qui soit simple à mettre en oeuvre et permette d'éviter la formation d'amas ou conglomérats durs dans le flux interne de manière à éviter ou minimiser les incidents lors de leur tréfilage subséquents, notamment les ruptures ou déchirements.

La solution est un procédé de fabrication d'un fil fourré à partir d'une bande métallique, ou feuillard, et d'éléments de remplissage, ou flux interne, comprenant les étapes de :
a) amener progressivement et de manière continue, au moyen de dispositifs d'entrainement, une bande métallique ayant deux bords longitudinaux parallèles,
b) conformer la bande métallique en une gouttière (section en « U ») par rapprochement de ses bords longitudinaux,
c) introduire dans la gouttière obtenue à l'étape b) des éléments de remplissage,
d) conformer la gouttière remplie d'éléments de remplissage obtenue à l'étape c) en un pré-fil de forme tubulaire (section en « O ») par rapprochement de ses bords longitudinaux jusqu'au contact ou quasi-contact l'un de l'autre, ledit pré-fil étant mobile et entraîné par des dispositifs d'entrainement, et
e) souder par faisceau laser les deux bords longitudinaux du pré-fil,
caractérisé en ce que, pendant l'étape e), on maintient un écran protecteur positionné à l'intérieur du pré-fil, entre le site d'impact du faisceau laser au niveau desdits bords longitudinaux et les éléments de remplissage, ledit écran protecteur étant, pendant l'étape e), en position fixe et statique par rapport aux dispositifs d'entrainement et au pré-fil, l'écran protecteur forme une barrière mécanique empêchant que le faisceau laser ne frappe les éléments de remplissage lorsqu'il passe entre les deux bords, et l'écran protecteur est retiré de l'intérieur du fil après soudage.

En d'autres termes, l'écran protecteur forme une barrière mécanique qui arrête le faisceau laser lorsque celui-ci passe à travers les bords longitudinaux à souder, ce qui évite que ledit faisceau laser ne vienne frapper les éléments de remplissage situés en dessous de l'écran.

L'écran permet donc de protéger les éléments de remplissage et d'éviter leur détérioration par le faisceau, pendant le soudage proprement dit, l'écran étant retiré du fil après soudage (d'une quantité de tube préfixée, étant l'écran un matériel consommable qu'il faut changer pendant les setups de la machine).

Selon le cas, le procédé de l'invention peut comprendre l'une ou plusieurs des caractéristiques techniques suivantes :
- l'axe du faisceau laser est perpendiculaire à l'axe du pré-fil (et donc aussi des bords longitudinaux). De préférence, l'axe du faisceau laser est vertical et/ou l'axe du pré-fil est horizontal.
- l'écran protecteur comporte une surface supérieure arquée positionnée en vis-à-vis de la paroi interne du pré-fil (ou pré-tube).
- l'écran protecteur est en métal.
- l'écran protecteur est en cuivre, bronze, laiton ou argent.
- l'écran protecteur est refroidi, de préférence l'écran protecteur est refroidi par un fluide réfrigérant choisi parmi l'eau ou l'azote liquide.
- l'écran protecteur est porté par un système mécanique permettant de déplacer ou d'orienter l'écran protecteur selon et/ou par rapport à l'axe du pré-tube ou pré-fil.
- l'écran protecteur a une forme de tuile.
- l'écran protecteur est équipé de moyens de mesure de résistance permettant de mesurer la résistance électrique au sein de l'écran protecteur.
- les étapes a) à e) sont opérées de manière continue sur une ligne de fabrication de fil.
- les rapprochements de bords aux étapes b) et d) sont opérés au moyen de galets presseurs.
- il comporte une étape supplémentaire dans laquelle on élimine l'huile de la bande métallique et on essuie ou on sèche ensuite la bande.
- on élimine l'huile en nettoyant la bande avec un solvant, un détergent ou avec un mélange des deux.
- on sèche la bande avec une lame en plastique, un tissu absorbant et/ou de l'air comprimé, de préférence en soumettant successivement la bande aux trois moyens de séchage agencés en série.
- il comporte une autre étape supplémentaire dans laquelle on chanfreine les bords longitudinaux de la bande métallique pour augmenter et/ou pour régulariser la surface de contact entre eux, avant soudage.
- le faisceau laser est délivré par un générateur ou une source laser de type CO₂, YAG, à fibres ou à disques, de préférence à fibres ou à disques, notamment une source laser à fibres d'ytterbium.
- on distribue un gaz inerte, par exemple Ar, dans le tube au environ de la zone de soudage pour minimiser la présence de N₂ et de O₂ dans le fil.
- préalablement à l'étape b), on chanfreine les deux bords longitudinaux à souder.
- les dispositifs d'entrainement comprennent des galets motorisés permettant de conférer à la bande métallique ou feuillard, un mouvement de translation, notamment pour l'amener progressivement au niveau de la tête laser où les bords longitudinaux sont soudés l'un avec l'autre.
- les éléments de remplissage sont disposés en une ou plusieurs couches superposées l'une à l'autre.
- les éléments de remplissage sont disposés en plusieurs couches, l'une des couches contenant uniquement des éléments non métalliques et l'autre des couches contenant des éléments métalliques et éventuellement non métalliques.
- le tube soudé obtenu après soudage par faisceau laser des deux bords longitudinaux du pré-fil à l'étape e) ne contient pas l'écran protecteur.

L'invention porte aussi sur une installation de fabrication d'un fil fourré à partir d'une bande métallique et d'éléments de remplissage, comprenant :
- des galets d'entrainement motorisés permettant d'amener progressivement une bande métallique ayant deux bords longitudinaux parallèles à souder l'un à l'autre,
- des premiers galets presseurs pour conformer la bande métallique en une gouttière (section en « U ») par rapprochement de ses bords longitudinaux,
- un dispositif d'alimentation en éléments de remplissage permettant d'introduire dans la gouttière de section en « U » des éléments de remplissage,
- des seconds galets presseurs pour conformer la gouttière remplie d'éléments de remplissage en un pré-fil de forme tubulaire par rapprochement de ses bords longitudinaux jusqu'au contact ou quasi-contact l'un de l'autre, et
- une tête de soudage laser apte à focaliser un faisceau laser au niveau d'au moins l'un des deux bords longitudinaux du pré-fil à souder,
caractérisée en ce qu'elle comporte, en outre, un écran protecteur fixé de manière solidaire et statique à une partie de l'installation, et positionné en regard de la tête laser et à l'intérieur du pré-fil en forme de « O », entre le site d'impact du faisceau laser au niveau desdits bords longitudinaux et les éléments de remplissage, l'écran protecteur formant une barrière mécanique empêchant que le faisceau laser ne frappe les éléments de remplissage.

Selon le cas, l'installation selon l'invention peut comprendre l'une ou plusieurs des caractéristiques techniques suivantes :
- avantageusement, elle comporte en outre une ou des lames de chanfreinage, agencées en amont des galets presseurs, permettant d'opérer ainsi un chanfreinage d'un ou des deux bords longitudinaux à souder, de préférence un usinage simultané des deux bords.
- la tête laser est alimentée avec un faisceau laser délivré par un générateur ou une source laser de type CO₂, YAG, à fibres ou à disques, de préférence à fibres ou à disques, notamment une source laser à fibres d'ytterbium.
- l'écran protecteur est fixé à un dispositif de profilage comprenant lesdits premiers galets presseurs et les seconds galets presseurs conférant à la bande lesdites formes en « U » puisen « O ».
- l'écran protecteur est positionné entre le site de remplissage en ligne avec le flux de remplissage et le point ou site où s'effectue le soudage.
- l'écran protecteur a une forme allongée dans le sens de l'axe du pré-fil de forme tubulaire et une face supérieure arquée de manière à venir au mieux épouser la surface intérieur du pré-tube, par exemple une forme de tuile allongée.
- l'écran protecteur a une largeur entre 1 et 25 mm.
- l'écran protecteur est maintenu en position fixe par un dispositif de fixation comprenant élément de connexion, par exemple une tige ou une lame de fixation, fixé d'une part, à l'écran et, d'autre part, à un dispositif de soutien réglable conçu pour positionner l'écran dans le tube.
- l'écran est fixé de façon ajustable de manière à pouvoir être, pendant le soudage, repositionné dans une ou plusieurs positions données, par déplacement, notamment selon la direction d'avancement du tube ou par rotation, de manière à mieux repartir au sein dudit écran, la chaleur absorbée provenant de l'impact du faisceau laser sur celui-ci.
- l'écran protecteur est déplaçable, pendant le soudage, selon la direction d'avancement du fil, notamment par vibration, par mouvement alternatif ou par rotation, de manière repartir la chaleur absorbée résultant de l'impact du faisceau laser sur ledit écran.

L'invention va maintenant être mieux comprise grâce à la description suivante faite en références aux Figures annexées parmi lesquelles :
- la Figure 1 schématise les différentes étapes du procédé de l'invention, et
- les Figures 2A (vue en coupe de côté) et 2B (vue de dessus) schématise une installation de mise en oeuvre du procédé de l'invention.

La Figure 1 schématise les étapes d'un mode de réalisation du procédé de fabrication d'un fil fourré selon l'invention, lequel est fabriqué à partir d'une bande métallique, appelé feuillard, et d'éléments de remplissage, appelés flux interne.

La bande métallique 1 ou feuillard est typiquement formé en « U », par rapprochement progressif de ses bords longitudinaux, avant d'y introduire les éléments de remplissage, tel que des poudres ou flux 2 de remplissage contenant des éléments pulvérulents et/ou granulaires, comme des poudres métalliques, des éléments métalliques, tels des métaux élémentaires ou des ferro-alliages métalliques, des éléments non métalliques, par exemple des éléments formateurs de laitier par exemple les oxydes et les feldspaths de type TiO₂, Al₂O₃, SiO₂, MgO, KAlSi₃O₈..., ou des éléments ionisants sous forme de carbonates, de fluorures, de sulfates ou de silicates, par exemple CaF₂, Na₂SO₄, CaCO₃...

On commence par amener progressivement une bande métallique 1 ayant deux bords longitudinaux parallèles au moyen de dispositifs d'entrainement, tels des galets motorisés.

Une telle feuille métallique 1 a typiquement une largeur de 25 à 80 mm, une épaisseur de 0,8 à 4 mm et une longueur de plusieurs dizaines, voire centaines de mètres, voire de un à plusieurs kilomètres.

De préférence, on prend la précaution d'élimine l'huile susceptible de se trouver sur la bande métallique et on essuie ensuite la bande pour la sécher. Par exemple, on élimine l'huile en nettoyant la bande avec un solvant, un détergent ou un mélange des deux. De même, avantageusement, on sèche la bande en la soumettant successivement à un raclage au moyen d'une lame en plastique, un essuyage avec un tissu absorbant et enfin à un séchage gazeux avec de l'air comprimé.

Avantageusement, on chanfreine également les bords longitudinaux de la bande métallique 1 pour augmenter et/ou pour régulariser la surface de contact entre eux, avant leur soudage.

Le chanfreinage se fait par exemple à l'aide d'un système comprenant une ou plusieurs lames de chanfreinage, appelés « couteaux », qui vont usiner en continue la bande des deux cotées en éliminant les imperfections de forme et autres aspérités susceptibles d'avoir été créées pendant les opérations préalables de découpage du feuillard, c'est-à-dire de la bande métallique qui est obtenue par découpe au sein d'une bande métallique bobinée ayant une largeur initiale plus importante que celle de la bande métallique 1.

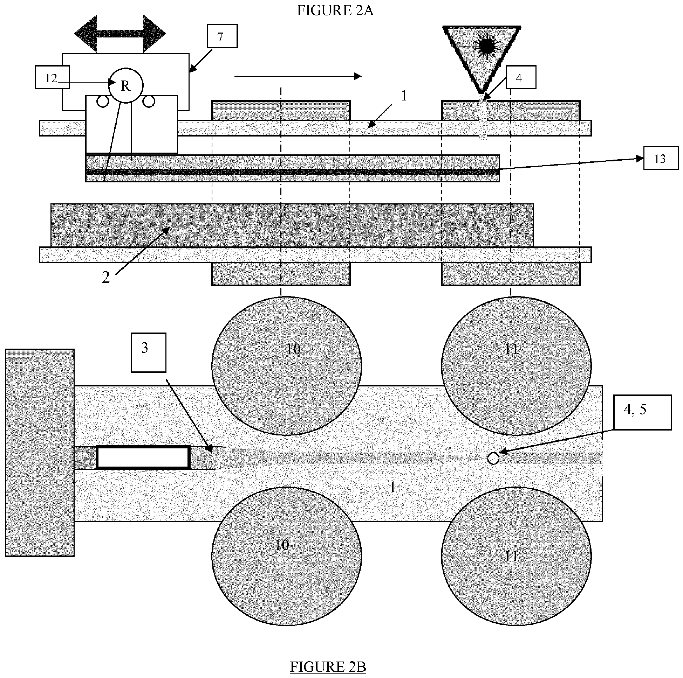

Ensuite, on conforme la bande métallique 1 en une sorte de gouttière, c'est-à-dire qu'on lui confère une section en « U », par rapprochement progressif de ses bords longitudinaux, avant d'y introduire les éléments de remplissage 2, tel que poudres métalliques ou autres. Ceci se fait avec des galets présents dans un dispositif de formage, communément appelé « formeuse », situé en amont des galets presseurs 10 sur Fig 2A/2B.

Lorsque la gouttière est remplie de la quantité d'éléments de remplissage 2 souhaitée, on confère à l'ensemble une forme de pré-fil tubulaire, c'est-à-dire avec section en « O », à bords non soudés par rapprochement desdits bords longitudinaux l'un de l'autre, jusqu'à leur contact ou quasi-contact. Ceci se fait avec des galets presseurs 10 et 11 sur Fig 2A/2B.

Les galets presseurs 10 et 11 ne sont normalement pas motorisés mais ils peuvent être motorisés, c'est-à-dire entrainés en rotation par un moteur électrique ou autre, commandé par une commande à contrôle numérique type CNC.

Le pré-tube remplit d'éléments de remplissage est alors soudé par un faisceau laser 4 qui vient fondre les deux bords longitudinaux du pré-fil pour réaliser un joint de soudure entre eux, après refroidissement du métal.

Selon la présente invention, on maintient un écran protecteur 3 positionné à l'intérieur du pré-fil, entre le site d'impact 5 du faisceau laser 4 au niveau desdits bords longitudinaux et les éléments de remplissage 2 afin d'empêcher que le faisceau laser 4 ne vienne frapper directement le flux de remplissage 2 et ne le détériore.

En d'autres termes, une protection mécanique 3 des éléments de remplissage 2 est agencée entre le point d'impact 5 du laser 4, qui est distribué verticalement, et le flux de remplissage 2 qui se trouve dans le pré-tube.

La protection mécanique assurée par l'écran 3 permet de protéger efficacement les éléments de remplissage dans le cas où une pénétration du faisceau laser 4 à l'intérieur du pré-fil se produit, c'est-à-dire un passage du faisceau entre les bords à souder, notamment en cas de rapprochement imparfait des bords, c'est-à-dire avec espace résiduel entre eux, ou quand on veut réaliser un soudage à pleine ou quasi-pleine pénétration.

L'écran 3 forme donc une barrière mécanique protégeant temporairement le flux situé sous l'écran 3, considérant que l'axe du faisceau laser est vertical et que l'axe du pré-fil est horizontal. L'écran 3 est retiré de l'intérieur du fil après la fin du soudage.

L'écran protecteur 3 peut revêtir des formes variées mais de façon préférentielle on lui confère une forme allongée dans le sens de l'axe du pré-fil de forme tubulaire et surtout une face supérieure arquée de manière à venir au mieux épouser la surface intérieur du pré-tube, par exemple une forme de tuile allongée.

De préférence, l'écran protecteur 3 a une largeur inférieure de 1 mm au diamètre interne du tube, préférablement entre 1 et 15 mm.

L'écran protecteur 3 est préférentiellement métallique, en particulier il est formé ou recouvert de cuivre ou d'un autre métal ayant une bonne propriété de réflexion des faisceaux laser, tel que bronze, laiton ou argent.

L'écran protecteur 3 est fixé à la machine ou dispositif de profilage, c'est-à-dire la portion de chaine de fabrication qui confère à la bande 1 ses formes en U puis en O, et est positionné entre le site de remplissage en ligne avec le flux de remplissage 2 et le point ou site de soudage où s'effectue le soudage à proprement parler, c'est-à-dire là où le faisceau laser vient frapper ou impacter les bords à souder.

Plus précisément, comme illustré en Figures 2A et 2B, un système mécanique 7 offre la possibilité de déplacer l'écran protecteur 3 selon l'axe longitudinal du tube et/ou de pivoter autour de cet axe pour réduire la concentration de la puissance du laser et/ou la fréquence de changement de l'écran protecteur 3. En effet, comme l'écran protecteur 3 absorbe le faisceau 4 lorsque ce dernier vient l'impacter, il se dégrade progressivement. Il est donc recommandé, voire indispensable, de pouvoir ajuster, y compris pendant le soudage, la position de l'écran protecteur 3 au fil du temps pour mettre en regard du faisceau, une partie de l'écran protecteur 3 pas ou peu abîmée. En particulier, il est recommandé de déplacer légèrement l'écran protecteur 3 au sein du pré-tube, après quelques heures de production continue, par exemple en le faisant avancer en translation de 2 à 5 mm dans l'axe ou autour de l'axe du tube.

Le dispositif de fixation qui maintient l'écran 3 en position comprend une lame, une tige de fixation, métallique ou analogue fixée, d'une part, à la surface de l'écran 3 et, d'autre part, à un dispositif de soutien réglable conçu pour positionner l'écran 3 dans le tube.

Afin de pouvoir détecter automatiquement si le faisceau a détérioré, de manière importante ou non, l'écran protecteur 3, par exemple s'il l'a percé, l'écran protecteur 3 est équipé de moyens de mesure de résistance ou de tension 12 permettant de mesurer la résistance ou la tension électrique au sein dudit écran protecteur 3.

En effet, les moyens de mesure, tel un capteur de résistivité ou de tension, permettent de mesurer la résistance ou la tension entre deux zones de l'écran 3, séparées par un matériel électriquement isolant 13.

Si le laser perce l'écran 3, alors le matériel isolant 13 va être percé aussi en changeant la continuité électrique des deux zones normalement séparées constituant l'écran 3. Le signal de résistivité, de tension ou de courant change alors en fonction de l'état de détérioration du matériel isolant entre les deux zones testée électriquement par le capteur.

Un tel changement électrique est ensuite traité par un comparateur, un PLC ou un PC, pour générer des alarmes en cas de perforation de l'écran 3.

Si par exemple le système détecte une réduction importante de la résistivité provoquée par la détérioration de l'isolant, il en déduit que l'écran protecteur 3 est percé et donc il doit être changé, et déclenche alors une alerte visant à avertir l'opérateur qu'on changement d'écran protecteur 3 est nécessaire.

Ceci permet d'arrêter rapidement la ligne de production si le faisceau a percé l'écran 3 et par conséquent, a fondu de manière intempestive des éléments du flux interne.

Afin de ralentir la dégradation de l'écran protecteur 3, on peut refroidir ce dernier grâce à un système de refroidissement interne 6 qui y distribue un fluide de refroidissement, tel de l'eau de refroidissement, voire un gaz cryogénique, tel de l'azote froid.

Les étapes du procédé de l'invention sont opérées de manière continue et progressive sur la bande métallique, à savoir le feuillard, comme illustré en Figures 2A et 2B.

Ainsi, la mise en forme en U puis en O se fait grâce à des galets de formage 10 agencés en amont de galets de soudage 11 servant à maintenir les deux bords du pré-tube bien en contact l'un avec l'autre pendant et juste après leur soudage par le faisceau laser 4.

L'invention concerne donc un procédé de fabrication en continu d'un fil fourré étanche destiné au soudage à l'arc électrique à partir d'une bande métallique conformée, de manière continue, de manière à lui conférer une section en « U » puis en « O », le fil étant soudé par faisceau laser, après son remplissage par des éléments de remplissage formant le flux interne du fil fourré.

## Revendications

1. Procédé de fabrication d'un fil fourré à partir d'une bande métallique et d'éléments de remplissage, comprenant les étapes de :
a) amener progressivement et de manière continue, au moyen de dispositifs d'entrainement, une bande métallique (1) ayant deux bords longitudinaux parallèles,
b) conformer la bande métallique (1) en une gouttière (section en « U ») par rapprochement de ses bords longitudinaux
c) introduire dans la gouttière obtenue à l'étape b) des éléments de remplissage (2),
d) conformer la gouttière remplie d'éléments de remplissage (2) obtenue à l'étape c) en un pré-fil de forme tubulaire (section en « O ») par rapprochement de ses bords longitudinaux jusqu'au contact ou quasi-contact l'un de l'autre, et
e) souder par faisceau laser (4) les deux bords longitudinaux du pré-fil,
**caractérisé en ce que**, pendant l'étape e), on maintient un écran protecteur (3) positionné à l'intérieur du pré-fil entraîné par des dispositifs d'entrainement, entre le site d'impact (5) du faisceau laser (4) au niveau desdits bords longitudinaux et les éléments de remplissage (2), ledit écran protecteur étant, pendant l'étape e), en position statique et fixe par rapport aux dispositifs d'entrainement et au pré-fil, l'écran protecteur (3) formant une protection mécanique empêchant que le faisceau laser ne frappe les éléments de remplissage (2), et l'écran protecteur (3) étant retiré de l'intérieur du fil après soudage.

2. Procédé selon la revendication précédente, **caractérisé en ce que** l'écran protecteur (3) comporte une surface supérieure (8) arquée positionnée en vis-à-vis de la paroi interne du pré-tube.

3. Procédé selon l'une de revendications précédentes, **caractérisé en ce que** l'écran protecteur (3) est en métal.

4. Procédé selon l'une de revendications précédentes, **caractérisé en ce que** l'écran protecteur (3) est en cuivre, bronze, laiton ou argent.

5. Procédé selon l'une de revendications précédentes, **caractérisé en ce que** l'écran protecteur (3) est refroidi (6), de préférence l'écran protecteur (3) est refroidi par un fluide réfrigérant choisi parmi l'eau ou l'azote liquide.

6. Procédé selon l'une de revendications précédentes, **caractérisé en ce que** l'écran protecteur (3) a une forme de tuile.

7. Procédé selon l'une de revendications précédentes, **caractérisé en ce que** l'écran protecteur (3) est porté par un système mécanique permettant de déplacer ou d'orienter l'écran protecteur (3) selon et/ou par rapport à l'axe du pré-tube, de préférence l'écran protecteur (3) est déplacé, pendant le soudage, selon la direction d'avancement du fil par vibration, par mouvement alternatif ou par rotation de manière repartir la chaleur absorbée résultant de l'impact du faisceau laser sur ledit écran.

8. Procédé selon l'une de revendications précédentes, **caractérisé en ce que** l'écran protecteur (3) est équipé de moyens de mesure de résistance permettant de mesurer la résistance électrique au sein de l'écran protecteur.

9. Installation de fabrication d'un fil fourré à partir d'une bande métallique et d'éléments de remplissage, comprenant :
- des galets d'entrainement motorisés permettant d'amener progressivement une bande métallique (1) ayant deux bords longitudinaux parallèles à souder l'un à l'autre,
- des premiers galets presseurs pour conformer la bande métallique (1) en une gouttière (section en « U ») par rapprochement de ses bords longitudinaux,
- un dispositif d'alimentation en éléments de remplissage permettant d'introduire dans la gouttière de section en « U » des éléments de remplissage (2),
- des seconds galets presseurs (10, 11) pour conformer la gouttière remplie d'éléments de remplissage en un pré-fil de forme tubulaire par rapprochement de ses bords longitudinaux jusqu'au contact ou quasi-contact l'un de l'autre, et
- une tête de soudage laser apte à focaliser un faisceau laser (4) au niveau d'au moins l'un des deux bords longitudinaux du pré-fil à souder,
**caractérisée en ce qu'**elle comporte, en outre, un écran protecteur (3) fixé de manière solidaire et statique à une partie de l'installation, et positionné en regard de la tête laser et à l'intérieur du pré-fil en forme de « O », entre le site d'impact (5) du faisceau laser (4) au niveau desdits bords longitudinaux et les éléments de remplissage (2), ledit écran protecteur (3) formant une barrière mécanique empêchant que le faisceau laser ne frappe les éléments de remplissage (2).

10. Installation selon la revendication 9, **caractérisée en ce qu'**elle comporte en outre une ou des lames de chanfreinage, agencées en amont des galets presseurs (10, 11), permettant d'opérer un chanfreinage d'un ou des deux bords longitudinaux à souder.

11. Installation selon l'une des revendications 9 ou 10 **caractérisée en ce que** l'écran protecteur (3) est fixé à un dispositif de profilage comprenant lesdits premiers galets presseurs et les seconds galets presseurs (10, 11) conférant à la bande (1) lesdites formes en « U » puis en « O ».

12. Installation selon l'une des revendications 9 à 11, **caractérisée en ce que** l'écran protecteur (3) est positionné entre le site de remplissage en ligne avec le flux de remplissage (2) et le point ou site où s'effectue le soudage.

13. Installation selon l'une des revendications 9 à 12, **caractérisée en ce que** l'écran protecteur (3) a une forme allongée dans le sens de l'axe du pré-fil de forme tubulaire et une face supérieure arquée de manière à venir au mieux épouser la surface intérieur du pré-tube, par exemple une forme de tuile allongée.

14. Installation selon l'une des revendications 9 à 13, **caractérisée en ce que** l'écran protecteur (3) est maintenu en position fixe par un dispositif de fixation comprenant un élément de connexion fixé, d'une part, à l'écran (3) et, d'autre part, à un dispositif de soutien réglable conçu pour positionner l'écran (3) dans le tube.

## Patentansprüche

1. Verfahren zur Herstellung eines Fülldrahtes ausgehend von einem Metallband und Füllelementen, umfassend die Schritte des:
a) schrittweisen und kontinuierlichen Zuführens eines Metallstreifens (1), der zwei parallele Längskanten aufweist, mittels Antriebsvorrichtungen,
b) Ausbildens des Metallstreifens (1) zu einer Rinne ("U"-förmiger Querschnitt) durch Annähern seiner Längskanten,
c) Einführens in die in Schritt b) erhaltene Rinne der Füllelemente (2),
d) Ausbildens der Rinne, die mit Füllelementen (2) gefüllt wird, die in dem Schritt c) erhalten wird, zu einem Vordraht von röhrenförmiger Form ("0"-förmiger Querschnitt) durch Annähern seiner Längskanten bis sie in Kontakt oder quasi in Kontakt miteinander sind und
e) Laserstrahlschweißens (4) der Längskanten des Vordrahtes,
**dadurch gekennzeichnet, dass** bei dem Schritt e) ein Schutzschirm (3) beibehalten wird, der im Inneren des Vordrahtes, der von den Antriebsvorrichtungen angetrieben wird, zwischen der Auftreffstelle (5) des Laserstrahls (4) an den Längskanten und den Füllelementen (2) angeordnet wird, wobei der Schutzschirm während des Schrittes e) in einer statischen und festen Position bezüglich der Antriebsvorrichtungen und des Vordrahtes ist, wobei der Schutzschirm (3) einen mechanischen Schutz bildet, der verhindert, dass der Laserstrahl auf die Füllelemente (2) auftrifft und wobei der Schutzschirm (3) nach dem Schweißen von dem Inneren des Drahtes entfernt wird.

2. Verfahren nach dem vorhergehenden Anspruch, **dadurch gekennzeichnet, dass** der Schutzschirm (3) eine bogenförmige obere Fläche (8) aufweist, die gegenüber der Innenwand des Vorrohrs angeordnet ist.

3. Verfahren nach einem der vorhergehenden Ansprüche, **dadurch gekennzeichnet, dass** der Schutzschirm (3) aus Metall ist.

4. Verfahren nach einem der vorhergehenden Ansprüche, **dadurch gekennzeichnet, dass** der Schutzschirm (3) aus Kupfer, Bronze, Messing oder Silber ist.

5. Verfahren nach einem der vorhergehenden Ansprüche, **dadurch gekennzeichnet, dass** der Schutzschirm (3) abgekühlt wird (6), vorzugsweise wird der Schutzschirm (3) durch ein Kühlmittel, ausgewählt aus Wasser oder flüssigem Stickstoff, abgekühlt.

6. Verfahren nach einem der vorhergehenden Ansprüche, **dadurch gekennzeichnet, dass** der Schutzschirm (3) die Form eines Ziegels aufweist.

7. Verfahren nach einem der vorhergehenden Ansprüche, **dadurch gekennzeichnet, dass** der Schutzschirm (3) durch ein mechanisches System getragen wird, das ermöglicht, den Schutzschirm (3) entlang und/oder zu der Achse des Vorrohrs zu bewegen oder auszurichten, vorzugsweise wird der Schutzschirm (3) während des Schweißens entlang der Vorschubrichtung des Drahts durch Vibration, durch hin- und hergehende Bewegung oder durch Rotation derart bewegt, um die absorbierte Wärme, die aus dem Auftreffen des Laserstrahls auf dem Schirm resultiert, zu verteilen.

8. Verfahren nach einem der vorhergehenden Ansprüche, **dadurch gekennzeichnet, dass** der Schutzschirm (3) mit Mitteln zum Messen des elektrischen Widerstands innerhalb des Schutzschirms ausgestattet ist.

9. Anlage zur Herstellung eines Fülldrahtes ausgehend von einem Metallband und Füllelementen, umfassend:
- motorisierte Antriebsrollen, die ermöglichen, einen Metallstreifen (1), der zwei parallele Längskanten aufweist, die miteinander zu verschweißen sind, schrittweise und kontinuierlich zuzuführen,
- erste Andruckrollen, um den Metallstreifen (1) zu einer Rinne ("U"-förmiger Querschnitt) durch Annähern seiner Längskanten auszubilden,
- eine Vorrichtung zum Zuführen von Füllelementen, die ermöglicht, Füllelemente (2) in die Rinne mit "U"-förmigem Querschnitt einzuführen,
- zweite Andruckrollen (10, 11), um die Rinne, die mit Füllelementen gefüllt ist, zu einem Vordraht von röhrenförmiger Form durch Annähern seiner Längskanten bis sie in Kontakt oder quasi in Kontakt miteinander sind, auszubilden und
- einen Laserschweißkopf, der geeignet ist, einen Laserstrahl (4) an mindestens einer der zwei zu verschweißenden Längskanten des Vordrahtes zu fokussieren,
**dadurch gekennzeichnet, dass** sie ferner einen Schutzschirm (3) aufweist, der fest verbunden und statisch mit einem Teil der Anlage befestigt ist und gegenüberliegend von dem Laserkopf und im Inneren des "O"-förmigen Vordrahtes zwischen der Auftreffstelle (5) des Laserstrahls (4) an den Längskanten und den Füllelementen (2) angeordnet ist, wobei der Schutzschirm (3) eine mechanische Barriere bildet, die verhindert, dass der Laserstrahl auf die Füllelemente (2) auftrifft.

10. Anlage nach Anspruch 9, **dadurch gekennzeichnet, dass** sie ferner eine Anfasklinge oder Anfasklingen aufweist, die vorgelagert vor den Andruckrollen (10, 11) angeordnet sind, die ermöglichen, eine Anfasung von einer oder der zwei zu verschweißenden Längskanten durchzuführen.

11. Anlage nach einem der Ansprüche 9 oder 10, **dadurch gekennzeichnet, dass** der Schutzschirm (3) an einer Profilierungsvorrichtung befestigt ist, die die ersten Andruckrollen und die zweiten Andruckrollen (10, 11) aufweist, die dem Band (1) die "U"-Form und dann die "O"-Form verleihen.

12. Anlage nach einem der Ansprüche 9 bis 11, **dadurch gekennzeichnet, dass** der Schutzschirm (3) zwischen der Füllstelle in Reihe mit dem Füllstrom (2) und dem Punkt oder der Stelle, an dem oder an der die Schweißung durchgeführt wird, angeordnet ist.

13. Anlage nach einem der Ansprüche 9 bis 12, **dadurch gekennzeichnet, dass** der Schutzschirm (3) in der Richtung der Achse des Vordrahtes von röhrenförmiger Form eine längliche Form und eine bogenförmige obere Fläche, beispielsweise eine Form einer länglichen Ziegel, derart aufweist, um an der Innenfläche des Vorrohrs besser anzuliegen.

14. Anlage nach einem der Ansprüche 9 oder 13, **dadurch gekennzeichnet, dass** der Schutzschirm (3) durch eine Befestigungsvorrichtung, die ein Verbindungselement aufweist, das einerseits an dem Schirm (3) und andererseits an einer einstellbaren Stützvorrichtung befestigt ist, die ausgelegt ist, um den Schirm (3) in dem Rohr zu positionieren, in einer festen Position gehalten wird.

## Claims

1. A method for manufacturing a flux-cored wire from a metal strip and filling elements, said method comprising the following steps:
a) progressively and continuously supplying a metal strip (1) having two parallel longitudinal edges by means of drive devices,
b) shaping the metal strip (1) into a groove ("U" section) by bringing the longitudinal edges of the strip towards one another,
c) introducing filling elements (2) into the groove obtained in step b),
d) shaping the groove filled with filling elements (2) obtained in step c) into a preliminary tubular wire ("0" section) by bringing the longitudinal edges of the strip towards one another until they contact or quasi contact one another, and
e) soldering the two longitudinal edges of the preliminary wire by laser beam (4),
**characterised in that**, during step e), a protective screen (3) is held, positioned inside the preliminary film driven by the drive devices, between the point of impingement (5) of the laser beam (4) at said longitudinal edges and the filling elements (2), said protective screen being in a static position during step e) and fixed relative to the drive devices and the preliminary wire, the protective screen (3) forming a mechanical protection means preventing the laser beam from striking the filling elements (2), and the protective screen (3) being removed from inside the wire after soldering.

2. The method according to the preceding claim, **characterised in that** the protective screen (3) has an arched upper surface (8) positioned opposite the inner wall of the preliminary tube.

3. The method according to either one of the preceding claims, **characterised in that** the protective screen (3) is made of metal.

4. The method according to any one of the preceding claims, **characterised in that** the protective screen (3) is made of copper, bronze, brass or silver.

5. The method according to any one of the preceding claims, **characterised in that** the protective screen (3) is cooled (6), preferably the protective screen (3) is cooled by a coolant fluid selected from water or liquid nitrogen.

6. The method according to any one of the preceding claims, **characterised in that** the protective screen (3) has the shape of a tile.

7. The method according to any one of the preceding claims, **characterised in that** the protective screen (3) is carried by a mechanical system making it possible to move or orientate the protective screen (3) along and/or relative to the axis of the preliminary tube, the protective screen (3) preferably being moved, during the soldering, in the direction of advancement of the wire by vibration, by reciprocating movement or by rotation so as to distribute the absorbed heat resulting from the impingement of the laser beam on said screen.

8. The method according to any one of the preceding claims, **characterised in that** the protective screen (3) is equipped with resistance-measuring means making it possible to measure the electrical resistance within the protective screen.

9. An installation for fabricating a flux-cored wire from a metal strip and filling elements, said installation comprising:
- motorised drive rollers making it possible to progressively supply a metal strip (1) having two parallel longitudinal edges to be soldered to one another,
- first press rollers for shaping the metal strip (1) into a groove ("U" section) by bringing the longitudinal edges of the strip towards one another,
- a device for supplying filling elements making it possible to introduce filling elements (2) into the "U"-section groove,
- second press rollers (10, 11) for shaping the groove filled with filling elements into a preliminary wire of tubular form by bringing the longitudinal edges of the strip towards one another until they contact or quasi contact one another, and
- a laser soldering head able to focus a laser beam (4) on at least one of the two longitudinal edges of the preliminary wire to be soldered,
**characterised in that** said installation also comprises a protective screen (3) that is fixed firmly and in a static manner to part of the installation and is positioned opposite the laser head and inside the preliminary "O"-shaped wire between the point of impingement (5) of the laser beam (4) at said longitudinal edges and the filling elements (2), said protective screen (3) forming a mechanical barrier preventing the laser beam from striking the filling elements (2).

10. The installation according to claim 9, **characterised in that** it also comprises one or more chamfering blades, arranged upstream of the press rollers (10, 11), making it possible to form a chamfer on one or both of the longitudinal edges to be soldered.

11. The installation according to either one of claims 9 or 10, **characterised in that** the protective screen (3) is fixed to a profiling device comprising said first press rollers and second press rollers (10, 11), giving the strip (1) said "U" and then "O" shapes.

12. The installation according to any one of claims 9 to 11, **characterised in that** the protective screen (3) is positioned between the filling site in line with the filling flux (2) and the point or site where the soldering is performed.

13. The installation according to any one of claims 9 to 12, **characterised in that** the protective screen (3) has an elongate shape in the direction of the axis of the tubular preliminary wire and an arched upper face so as to better fit against the inner surface of the preliminary tube, for example has an elongate tile shape.

14. The installation according to any one of claims 9 to 13, **characterised in that** the protective screen (3) is held in a fixed position by a fixing device comprising a connection element fixed on the one hand to the screen (3) and on the other hand to an adjustable support device designed to position the screen (3) in the tube.
